# FASCICULE DE BREVET EUROPEEN

(11) **EP 2 556 974 B1**
(45) Date de publication et mention de la délivrance du brevet: **18.11.2015**
(21) Numéro de dépôt: 12180031.2
(22) Date de dépôt: 10.08.2012
(51) Int. Cl.: B60D 1/28, B60D 1/06, B60D 1/58

(54) **Agencement d'attelage pour véhicule tracteur, comprenant un corps de crochet de réception d'un organe d'attelage d'un véhicule mené**
Anhängerkupplungsanordnung für Zugfahrzeug, die einen Hakenkörper zur Aufnahme eines Kupplungsorgans eines gezogenen Fahrzeugs umfasst
Hitch arrangement for a tow vehicle, comprising a hook body for receiving a coupling member of a towed vehicle

(30) Priorité: 10.08.2011 FR 1157279
(43) Date de publication de la demande: 13.02.2013
(73) Titulaire: Pommier, 95310 Saint Ouen l'Aumone (FR)
(72) Inventeur: Preud'Homme, Thierry, 95450 Commeny (FR); Aubignat, Frédéric, 60660 Cires Les Mello (FR)
(74) Mandataire: Berger, Helmut

(56) Documents cités:
- DE-A1-102008 031 825
- DE-C1- 3 824 028
- US-A1- 2004 239 077
- US-A1- 2009 039 619

## Description

L'invention concerne un agencement d'attelage pour véhicule tracteur, comportant un corps de crochet sur lequel peut être attelé un organe d'attelage d'un véhicule mené et un ensemble menotte déplaçable entre une position de blocage de l'organe d'attelage dans sa position attelée sur le corps de crochet et une position permettant le désengagement de cet organe d'attelage du corps de crochet, l'ensemble menotte comprenant un organe de menotte et un verrou permettant le verrouillage de l'ensemble menotte dans sa position de blocage.

Les agencements de ce type, qui sont connus ne satisfont pas aux exigences de sécurité d'ergonomie et d'environnement. Le document US 2004/0239077 A1 montre le préambule de la revendication 1.

L'invention a pour but de proposer un agencement d'attelage qui ne présente pas ces inconvénients.

Ce but est atteint par la revendication 1.

Selon une autre caractéristique de l'invention, l'agencement est **caractérisé en ce que** l'ergot de verrouillage du verrou en forme de capot est susceptible de s'engager dans un orifice prévu dans la surface supérieure libre de l'organe de crochet.

Selon encore une autre caractéristique de l'invention, l'agencement est **caractérisé en ce que** le verrou est monté sur le corps de menotte pivotant autour d'un axe perpendiculaire à l'axe de pivotement de l'ensemble menotte sur le corps de verrou, à l'encontre d'un ressort de rappel du verrou dans sa position de verrouillage de l'ensemble menotte dans sa position de blocage d'un organe d'attelage.

Selon encore une autre caractéristique de l'invention, l'agencement est **caractérisé en ce que** les moyens de verrouillage du verrou précités comprennent un pion déplaçable dans le corps de menotte entre une position de verrouillage du verrou dans sa position de verrouillage par l'ergot de l'ensemble menotte dans sa position de blocage d'un organe d'attelage et une position de désengagement de l'ergot dans laquelle l'ensemble menotte peut pivoter librement autour de son axe de pivotement.

Selon encore une autre caractéristique de l'invention, l'agencement est **caractérisé en ce que** le pion est déplaçable pour quitter sa position de verrouillage par enfoncement manuel dans le corps de menotte à l'encontre d'un ressort de rappel.

Selon encore une autre caractéristique de l'invention, l'agencement est **caractérisé en ce que** le pion traverse un évidement pratiqué dans la paroi latérale correspondante du verrou en forme de capot, qui est configuré de façon à permettre en coopération avec la configuration du pion le verrouillage et le pivotement du verrou sur le corps de menotte.

Selon encore une autre caractéristique de l'invention, l'agencement est **caractérisé en ce que** le corps de menotte (50) est tubulaire et le dispositif verrou (52) est monté pivotant et axialement mobile dans le corps de menotte.

Selon encore une autre caractéristique de l'invention, l'agencement est caractérisé en ce que le dispositif verrou comprend une pièce de verrouillage qui est axialement mobile dans le corps de menotte entre une position de verrouillage de l'ensemble menotte dans sa position de blocage et une position de déverrouillage de l'ensemble menotte et pivotant entre une position dans laquelle elle est axialement immobilisée et une position dans laquelle est axialement déplaçable entre ses positions de verrouillage et de déverrouillage, la pièce étant axialement immobilisable par pivotement dans sa position de verrouillage.

Selon encore une autre caractéristique de l'invention, l'agencement est caractérisé en ce que le dispositif verrou comporte des moyens de rappel de: la pièce de verrouillage dans sa position axialement immobilisée dans sa position de verrouillage de l'ensemble menotte.

Selon encore une autre caractéristique de l'invention, l'agencement est caractérisé en ce que les moyens de rappel sont formés par un ressort élastiquement déformable en compression et en torsion, qui est monté entre la pièce de verrouillage et le corps de menotte.

.Selon encore une autre caractéristique de l'invention, l'agencement est **caractérisé en ce que** le dispositif verrou comporte une poignée qui permet le pivotement et le déplacement axial de la pièce de verrouillage.

L'invention sera mieux comprise, et d'autres buts, caractéristiques, détails et avantages de celle-ci apparaîtront plus clairement au cours de la description explicative qui va suivre faite en référence aux dessins schématiques annexés donnés uniquement à titre d'exemple illustrant un seul mode de réalisation de l'invention et dans lesquels :

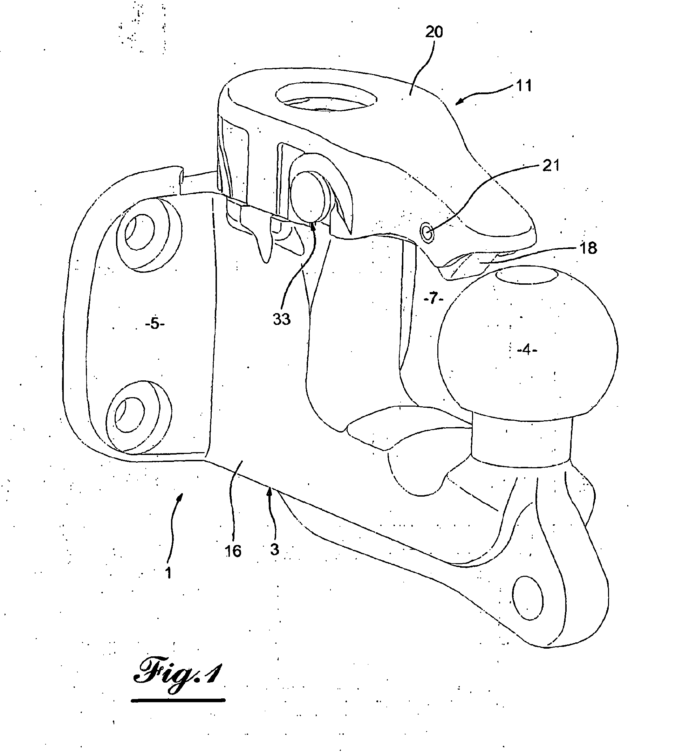

- la figure 1 est une vue en perspective d'un agencement d'attelage pour véhicule tracteur, selon l'invention, montrant l'ensemble menotte dans sa position de blocage d'un organe d'attelage d'un véhicule mené (non représenté) ;
- la figure 2 est une vue latérale de l'agencement selon la figure 1, montrant un anneau torique d'attelage engagé dans le berceau de l'agencement d'attelage ;
- la figure 3 est une vue en coupe selon la ligne III-III de la figure 2 ;
- la figure 4 est une vue de face montrant l'ensemble menotte dans une position de rotation intermédiaire entre la position de blocage d'un organe d'attelage d'un véhicule mené et une position permettant le désengagement de l'organe d'attelage ;
- les figures 5A et 5B sont deux vues frontales montrant l'ensemble menotte formé par un corps de menotte et un capot formant verrou, dans deux positions différentes ;

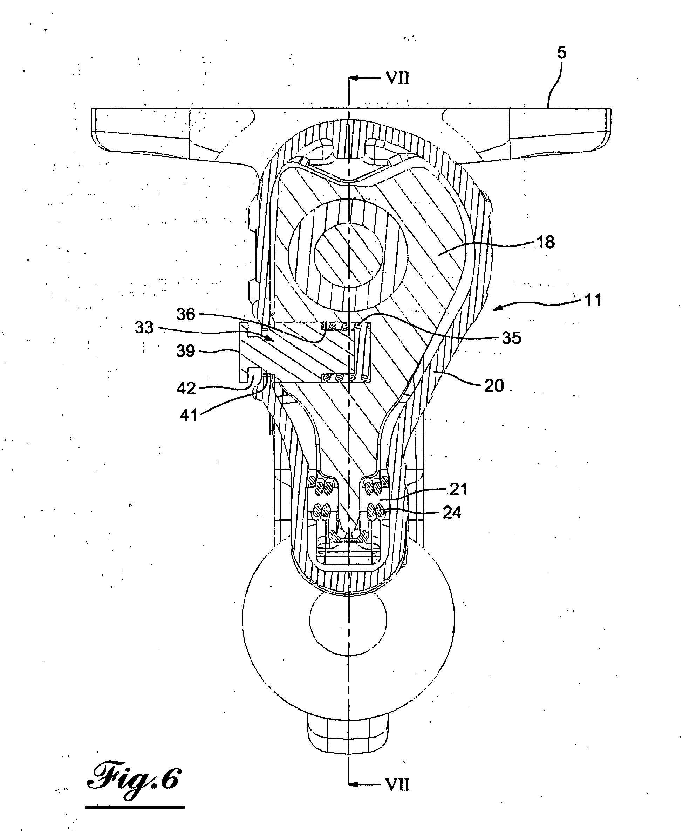

- la figure 6 est une vue en coupe le long de la ligne VI-VI de la figure 2 ;
- les figures 7A et 7B sont deux vues en coupe le long de la ligne VII-VII de la figure 6, qui montrent le capot dans deux positions de pivotement différentes ;
- la figure 8 est une vue latérale du capot.
- les figures 9 et 10 sont deux vues en perspective différentes d'un deuxième mode de réalisation de l'agencement d'attelage selon l'invention et montrent l'ensemble menotte dans sa position de blocage d'un organe d'attelage d'un véhicule mené (non représenté).
- la figure 11 est une vue en perspective de l'agencement des figures 9 et 10, montrant l'ensemble menotte dans sa position de désengagement de l'organe d'attelage ;
- la figure 12 est une vue en perspective de l'agencement d'attelage de la figure 9, montrant le corps de menotte dans une position intermédiaire permettant son pivotement vers sa position de la figure 11 ;
- la figure 13 est une vue en perspective et explosée de l'agencement des figures 9 à 12 ;
- la figure 14 est une vue latérale en direction de la flèche XIV de la figure 9 ;
- la figure 15 est une vue en coupe partielle dans le plan médiane de l'agencement de la figure 9 ;
- la figure 16 est une vue en coupe selon la ligne XVI-XVI de la figure 15 ;
- la figure 17 est une vue en coupe, avec arrachement et à plus grande échelle selon la ligne XVII-XVII. de la figure 15 ;
- la figure 18 est une vue en perspective et en coupe partielle axiale de la figure 9 ;
- la figure 19 est une vue en coupe dans le plan médian de l'agencement de la figure 12 ;
- la figure 20 est une vue en coupe selon la ligne XX-XX de la figure 19 ;
- la figure 21 est une vue en coupe, avec arrachement et à plus grande échelle selon la ligne XXI de la figure 19.

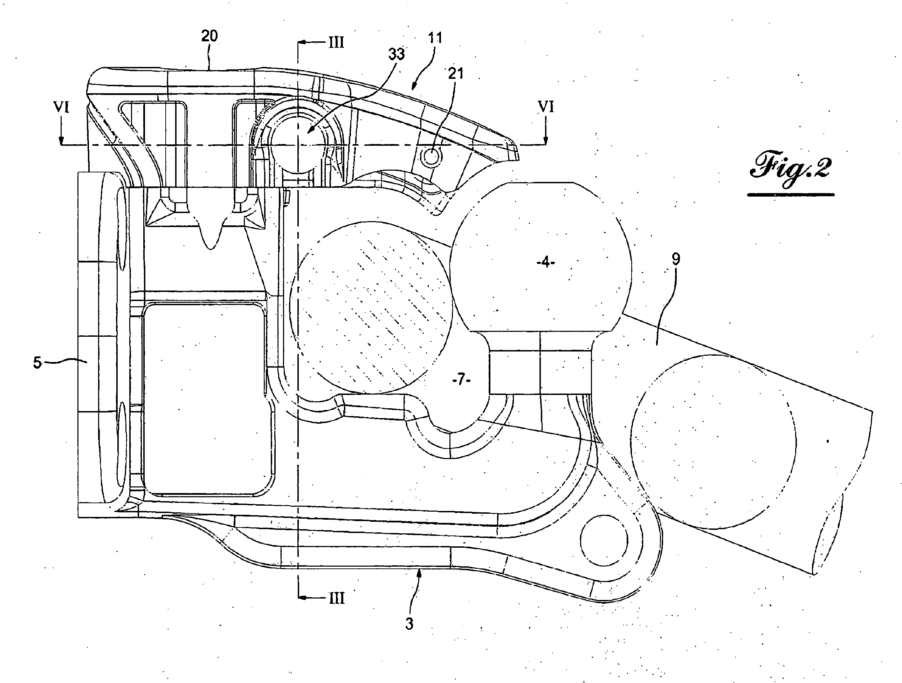

Conformément aux figures, un agencement d'attelage 1 selon l'invention comporte essentiellement un corps de crochet 3 de type à boule 4 qui s'étend à partir d'une semelle 5 de fixation du corps de crochet au châssis d'un véhicule tracteur, par exemple, à l'aide de boulons. Le corps de crochet 3 délimite un berceau 7 destiné à recevoir un organe d'attelage 9, par exemple en forme d'un anneau torique illustré à la figure 2 et faisant partie d'un véhicule mené non représenté. Bien entendu, l'agencement d'attelage permet également de recevoir une tête d'attelage coiffant la boule 4.

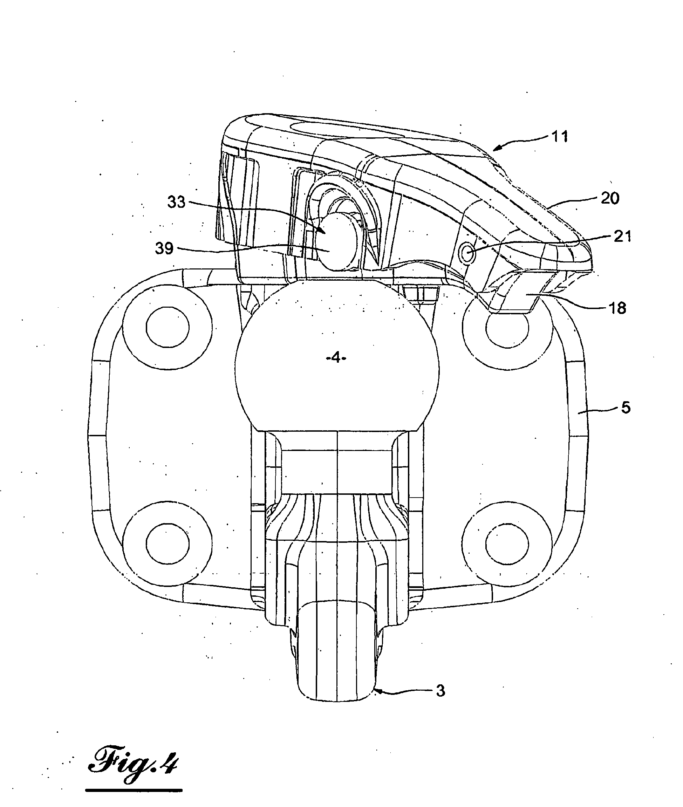

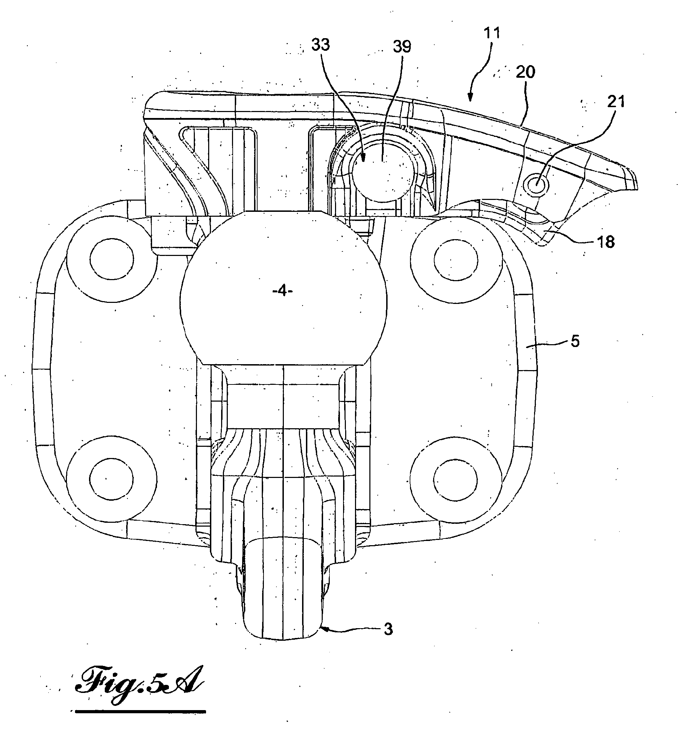

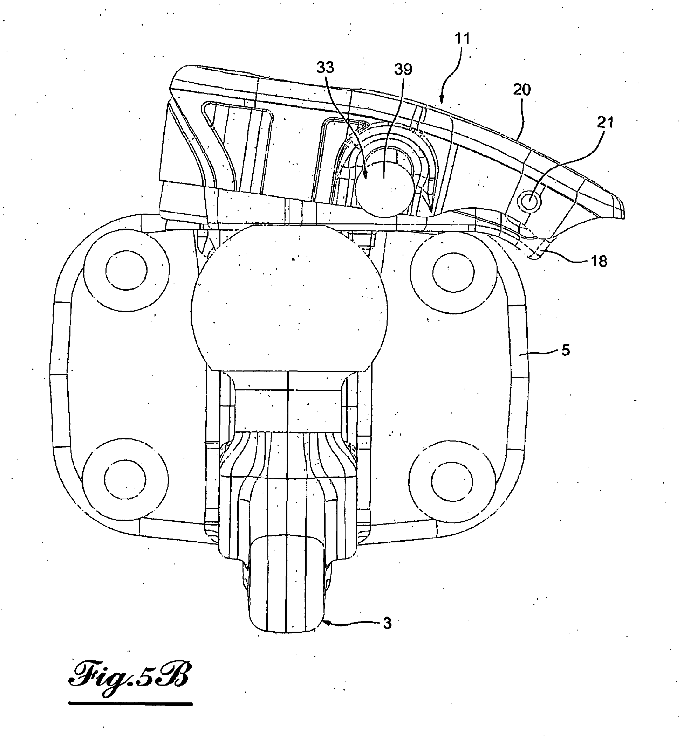

L'agencement 1 comporte en outre un ensemble menotte 11 pour bloquer l'organe d'attelage 9 dans sa position engagée dans le berceau 7, autour de la branche de crochet avant portant à son extrémité supérieure libre la boule 4, conformément à la figure 2. L'ensemble menotte 11 est monté rotatif autour d'un axe vertical entre sa position de blocage de l'organe d'attelage 9, dans laquelle l'ensemble 11 s'étend dans le plan de l'organe de crochet au-dessus du berceau 7 en fermant celui-ci, d'une part, et une position de dégagement du berceau, angulairement décalé de la position de l'angle de par exemple 90°, conformément aux figures 5A et 5B en passant par la position intermédiaire de la figure 4.

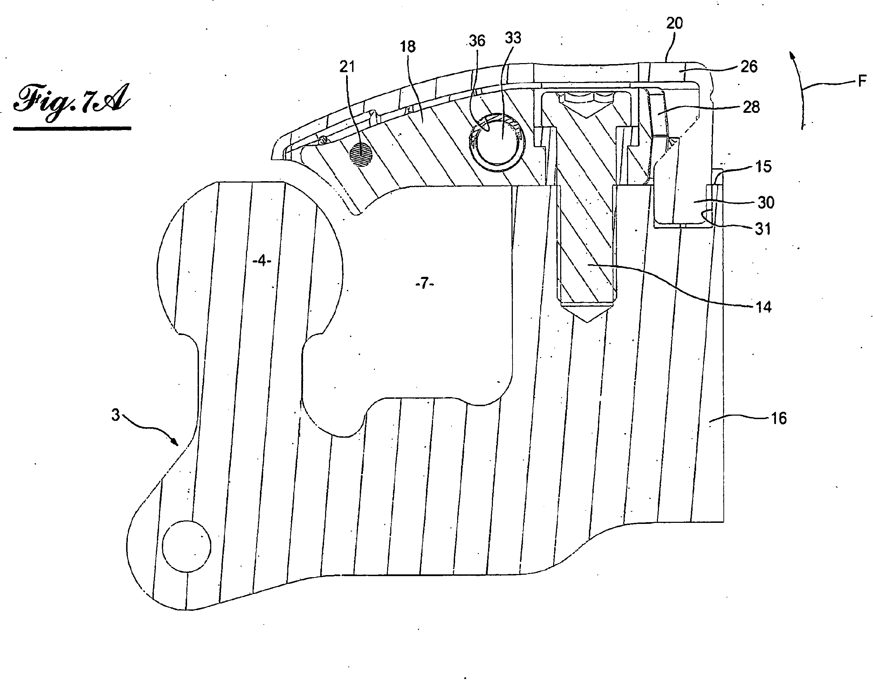

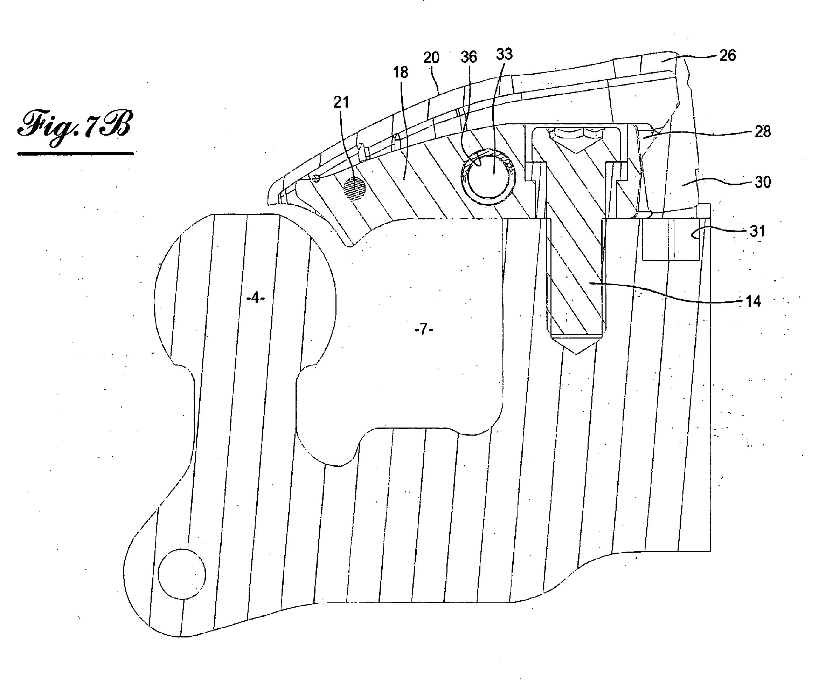

Comme on le voit sur les figures 7A et 7B, l'ensemble menotte 11 en forme générale d'un levier est monté pivotant sur un boulon 14 qui est vissé dans la face supérieure sensiblement horizontale 15 de la base 16 de l'organe de crochet, qui constitue la branche arrière du berceau, qui s'étend à partir de la plaque de fixation 5.

L'ensemble menotte 11 comprend un corps de menotte 18 qui est monté rotatif sur le boulon 14 et un organe de verrou 20 en forme d'un capot qui recouvre le corps de menotte 18 et est monté pivotant autour d'un axe 21 qui s'étend dans le corps de menotte 18 perpendiculairement à l'axe longitudinal de celui-ci. L'axe 21 est disposé au niveau de l'extrémité avant, c'est-à-dire adjacente à la boule 4, de la menotte.

Le capot 20 est susceptible de pivoter à l'encontre d'un ressort de torsion de rappel 24 entre une position dans laquelle sa partie arrière 26 est en butée contre la face 15 du corps de crochet 16, conformément à la figure 7A, et une position dans laquelle la partie arrière 26 est écartée du corps de menotte, comme le montre la figure 7B.

Les figures 7A et 7B montrent également que la partie arrière 26 du capot 20 est replié verticalement le long de la face arrière du corps de menotte et se termine par un ergot de verrouillage 30 qui est dimensionné de façon à pénétrer dans un orifice 31 pratiqué dans la face supérieure 15 de la base 16 de l'organe de crochet lorsque le capot se trouve dans sa position en butée contre le corps de menotte par sa partie arrière 26, selon la figure 7A.

On comprend aisément que, dans cette situation, l'ensemble menotte est empêché de tourner autour de l'axe 14 et est donc verrouillé dans sa position de blocage d'un organe d'attelage tel que l'anneau torique 9 de la figure 2.

L'ensemble menotte peut être déverrouillé en faisant pivoter le capot 20 autour de l'axe 21 dans la position dans laquelle l'ergot 30 est sorti de son orifice de réception 31, selon la figure 7B.

Il ressort de ce qui précède que l'ergot 30 constitue un premier moyen de verrouillage de l'ensemble menotte 11 dans sa position de blocage d'un organe d'attelage.

L'ensemble menotte comporte également des moyens de verrouillage du capot 20 dans sa position de verrouillage de l'ensemble sur le corps de crochet, dans la position de blocage selon la figure 7A.

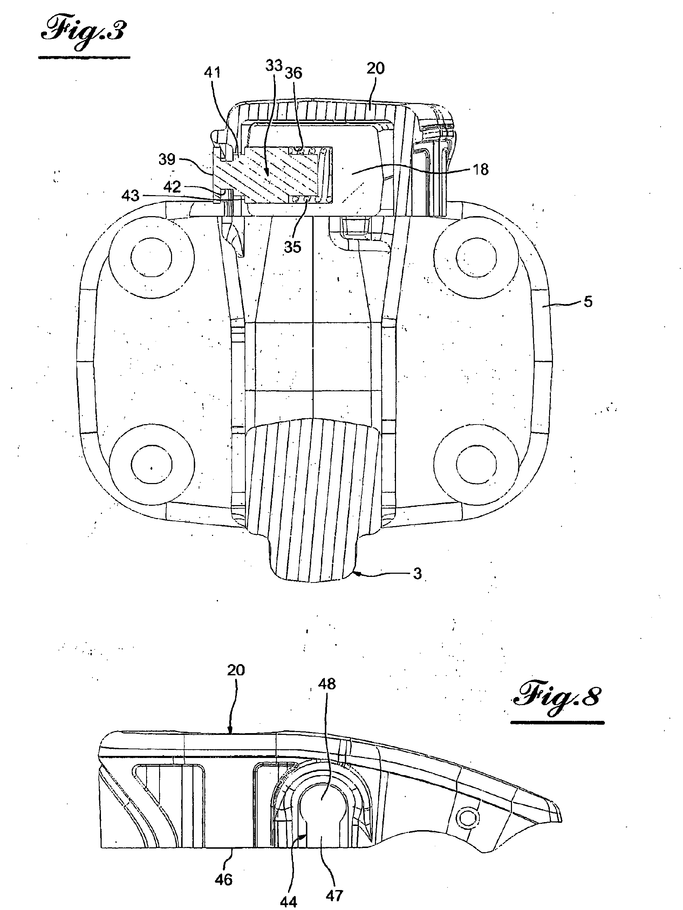

Comme on le voit notamment sur la figure 3, l'ensemble 11 comprend à cette fin un pion 3.3 qui est monté axialement mobile dans un alésage latéral cylindrique 36 du corps menotte 18. Le pion est configuré pour pouvoir être enfoncé dans l'alésage 36, à l'encontre d'un ressort de compression 35. La tête du pion présente une forme particulière. Comme le montre la figure 3, la partie du pion, située entre l'extrémité extérieure d'actionnement 39 et la partie 40 engagée dans l'alésage 36, comporte du côté de la partie 40 une première portion annulaire d'un diamètre réduit 41 par rapport à la partie 40 en formant un épaulement 43 et, du côté de l'extrémité d'actionnement 39, une deuxième portion annulaire 42 d'un diamètre encore plus faible.

Le pion engagé dans l'alésage 36 du corps de menotte passe à travers un évidement 44 dans la paroi latérale du capot, qui s'étend, comme le montre la figure 8, à partir du bord inférieur 46 du capot, perpendiculairement vers le haut, et comporte une première portion 47 d'une largeur constante qui s'ouvre à une extrémité vers l'extérieur et débouche par son autre extrémité dans une portion circulaire 48 dont le diamètre est supérieur à la largeur de la portion 47. Le diamètre de la portion circulaire 48 est légèrement plus grand que le diamètre de la portion 41 de plus grand diamètre du pion 33, tandis que la largeur de la portion 47 est légèrement plus grande que le diamètre de la portion de diamètre plus faible 42 du pion.

La position axiale du pion 33 détermine la position relative du capot 20 sur le corps de menotte 18. A l'état appliqué sur le corps de menotte 18 de la figure 7A, la portion de plus grand diamètre 41 du pion est engagée dans la portion circulaire 48 de l'évidement axial 44 dans la paroi latérale du capot. Le pion est axialement dans cette position par le ressort de rappel 35 disposé dans l'alésage 36 du corps de menotte et qui pousse l'épaulement 43 contre le bord de la portion circulaire 48. Dans cette position de l'extrémité arrière 26 du capot en butée contre la face 15 du corps de crochet 16, l'ergot 30 est dans sa position en saillie du bord inférieur du capot, c'est-à-dire dans sa position d'engagement dans l'orifice 31 du corps de crochet et de verrouillage de l'ensemble menotte dans sa position de blocage d'un organe d'attelage dans le berceau 7.

Lorsque le pion 33 est poussé axialement vers l'intérieur de l'alésage 36, à l'encontre du ressort 35, sous l'effet d'une pression exercée sur son extrémité extérieure d'actionnement 39, c'est la portion 42 de diamètre plus faible qui s'engage dans la portion annulaire 48 de l'évidement du capot. Or, dans la mesure où le diamètre de la portion de plus faible diamètre 42 du pion est légèrement inférieur à la largeur de la portion rectiligne 47 de l'évidement, le capot peut pivoter dans la direction F d'écartement de son extrémité arrière 26 de la face 15 du corps de crochet, ce qui est la position de désengagement de l'ergot 30 de l'orifice 31 du corps de crochet. Dans cette position du capot, l'ensemble menotte 11 peut être amené à pivoter sur la surface supérieure du corps de crochet autour du boulon 14.

Il est à noter que le rappel du pion 33 dans sa position de verrouillage du capot 20 sur le corps de menotte par l'engagement de sa partie de plus grand diamètre 41 dans l'ouverture circulaire 48 de plus grande diamètre de l'évidement du capot, se fait sous la pression du ressort de compression 35 interposé entre le pion et le fond de l'alésage 35 dans le corps de menotte.

Il ressort de ce qui précède que l'ensemble menotte est doublement verrouillable empêchant ainsi tout déverrouillage accidentel grâce à l'ergot 30 et au pion 33.

Après avoir décrit la structure de l'agencement selon l'invention, on décrira ci-après, brièvement, le fonctionnement de cet agencement.

Pour assurer le blocage d'un organe d'attelage 9 dans le berceau 7 du corps de ressort, on fait pivoter l'ensemble menotte 11 dans sa position de blocage dans laquelle l'ergot 30 s'engage dans l'évidement 31 dans la surface supérieure 15 du corps de crochet, sous l'effet du ressort de torsion 24. Lorsque l'ergot est engagé dans l'orifice 31, le ressort 35 pousse le pion dans sa position de blocage du capot sur le corps de menotte, avec engagement de la partie de plus grand diamètre 41 du pion dans l'ouverture circulaire plus grande 48 du capot. Ainsi, le double verrouillage est assuré.

Pour procéder à l'ouverture du corps de crochet, il faut successivement appuyer sur le pion 33 pour le repousser dans sa position d'engagement de la partie de plus faible diamètre 42 dans l'ouverture circulaire 48 de l'évidement du capot. Dans cette position, le capot 20 peut être relevé dans la direction de la flèche F, ce qui provoque la sortie de l'ergot 30 de l'orifice 31 du corps de crochet. L'ensemble menotte est ainsi libre pour pouvoir pivoter autour du boulon 14 dans sa position de l'ouverture du berceau 7, ce qui permet de sortir l'organe d'attelage de celui-ci.

Bien entendu, l'invention peut être modifiée de diverses manières sans sortir du cadre de l'invention. Il est également à noter que l'agencement d'attelage selon l'invention permet aussi d'utiliser, comme organe d'attelage, une tête d'attelage destinée alors à coiffer la boule.

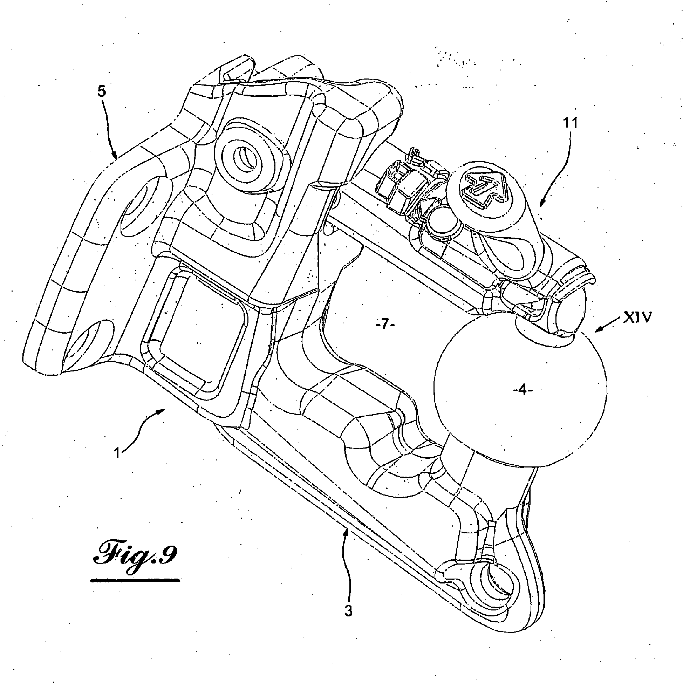

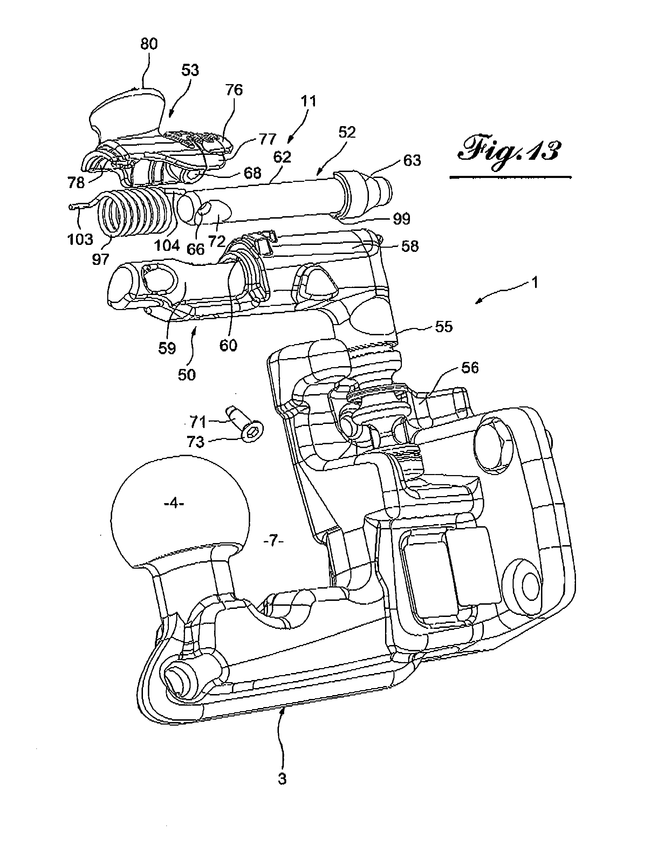

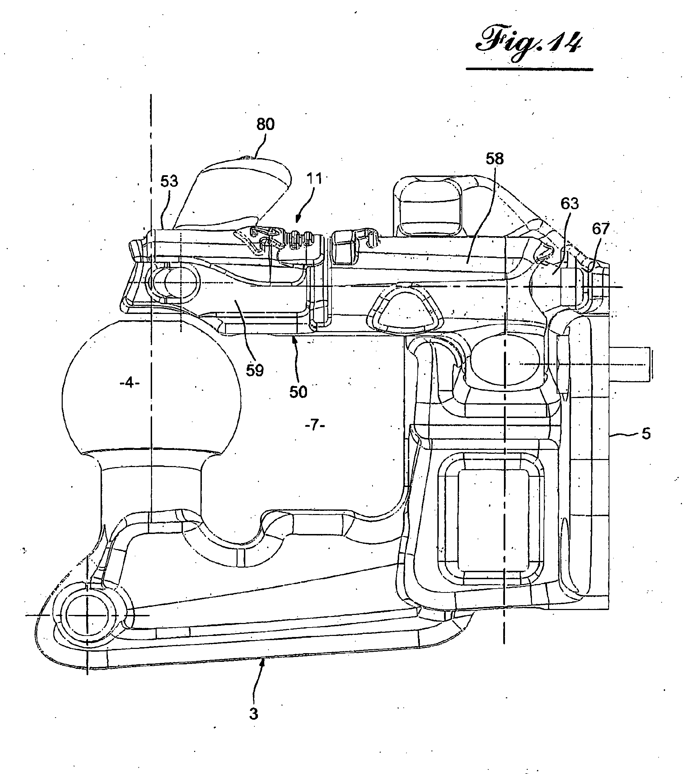

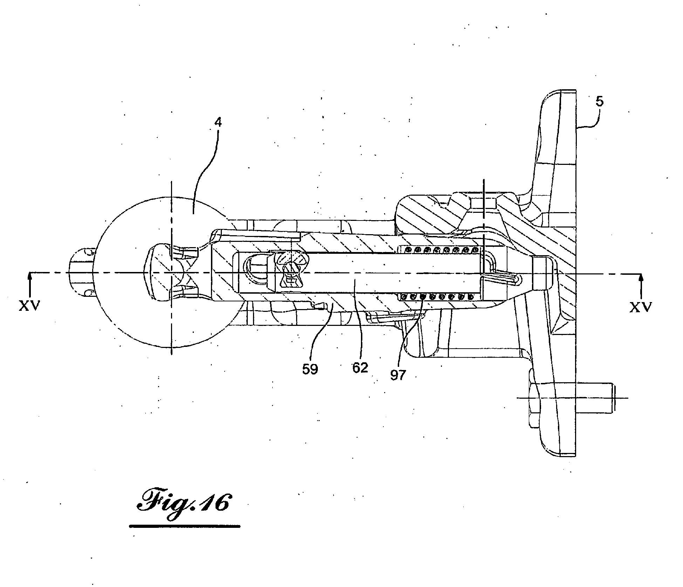

Les figures 9 à 18 décrivent un deuxième mode de réalisation d'un agencement d'attelage pour véhicule tracteur, selon l'invention

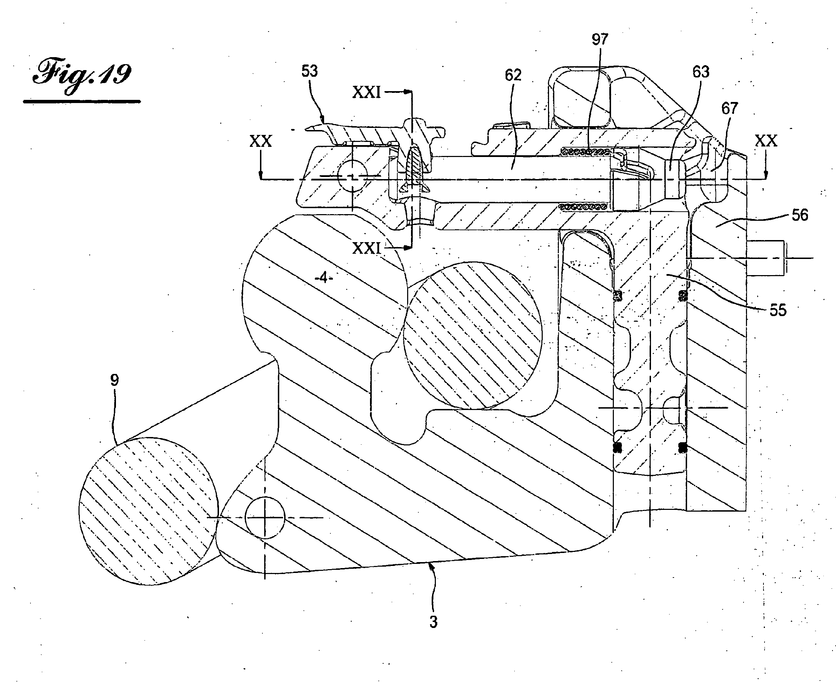

Comme dans le cas du premier mode de réalisation de l'invention, l'agencement d'attelage noté 1 comporte essentiellement un corps de crochet 3 du type à boule 4, qui s'étend à partir d'une semelle 5 de fixation du corps de crochet au châssis d'un véhicule tracteur (non représenté). Le corps de crochet 3 délimite un berceau 7 destiné à recevoir un organe d'attelage par exemple en forme d'un anneau torique 9 (figure 19) ou d'une tête d'attelage coiffant la boule 4. L'agencement 1 comporte en outre un ensemble menotte 11 pour bloquer l'organe d'attelage dans sa position engagée dans le berceau, autour de la branche de crochet avant portant à son extrémité supérieure libre la boule 4.

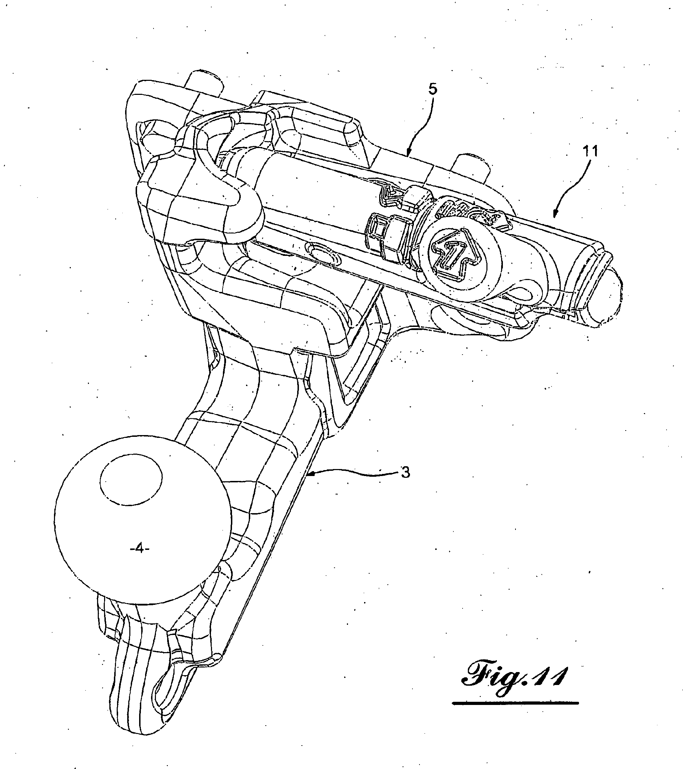

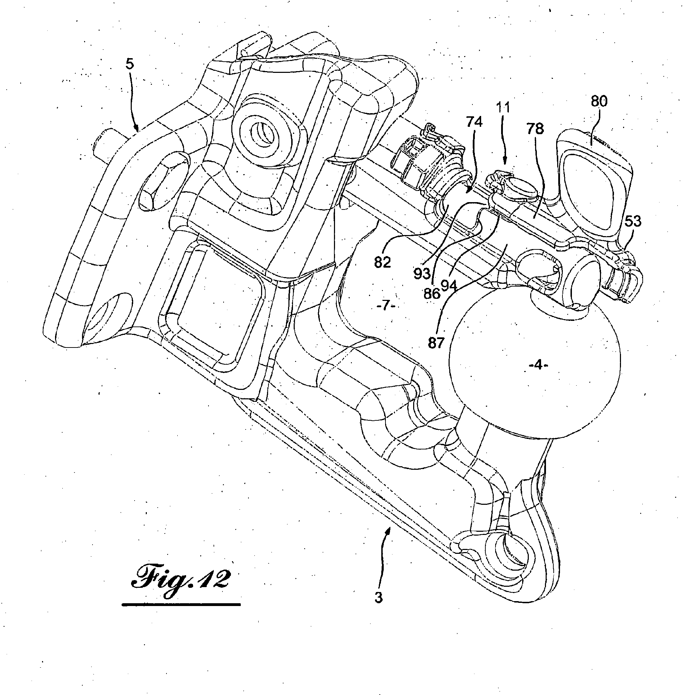

L'ensemble menotte 11 est monté rotatif autour d'un axe vertical entre sa position de blocage d'un organe d'attelage 9, illustrée aux figures 9, 10 et 14 à 18, dans laquelle l'ensemble 11 s'étend dans le plan du corps de crochet 3 au-dessus du berceau 7 en fermant celui-ci, d'une part, et, d'autre part, une position de dégagement du berceau, angulairement décalée de la position de blocage, d'un angle de 90°, conformément à la figure 11, en passant pas la position intermédiaire selon les figures 12 et 19 qui permet le pivotement de l'ensemble menotte vers sa position de la figure 11.

Comme dans le cas du premier mode de réalisation, l'agencement d'attelage 1 du deuxième mode de réalisation implique une double sécurité. L'ensemble menotte comporte un dispositif verrou pour son verrouillage dans sa position de blocage et des moyens de verrouillage du dispositif verrou dans sa position dans laquelle il verrouille l'ensemble menotte dans la position de blocage. Mais, différemment du premier mode de réalisation, le dispositif verrou est configuré de façon à éviter tout mouvement dans le plan du corps de crochet, c'est-à-dire en hauteur. Par conséquent, il n'y a plus de risque de choc avec les portes arrières lorsqu'il s'agit de portes de type 1/3, 2/ 3 telles qu'existantes sur les fourgons utilitaires. Cette absence de tout mouvement en hauteur permet aussi le montage de l'agencement d'attelage dans des pare-chocs sans usinage dédié au montage du produit.

Pour atteindre cet objectif, l'ensemble menotte 11 comporte un corps de menotte maintenant noté 50 sur lequel est monté pivotant et axialement déplaçable un dispositif verrou 52 pourvu d'une poignée d'actionnement 53.

Plus en détail, le corps menotte 50 est formé par un levier comportant à une extrémité un axe 55 qui s'étend perpendiculairement par rapport au levier et s'engage de façon pivotante dans la partie de support tubulaire 56 du corps de crochet, située du côté de la semelle de fixation 5. Le levier du corps menotte 50 est configuré pour recevoir le dispositif verrou 52. Le levier est de forme générale tubulaire et comporte une première portion arrière de base 58 adjacente à l'axe de pivotement 55 et une deuxième portion avant 59 qui coopère avec la poignée d'actionnement 53, ainsi qu'une zone intermédiaire de guidage et d'épaulement 60.

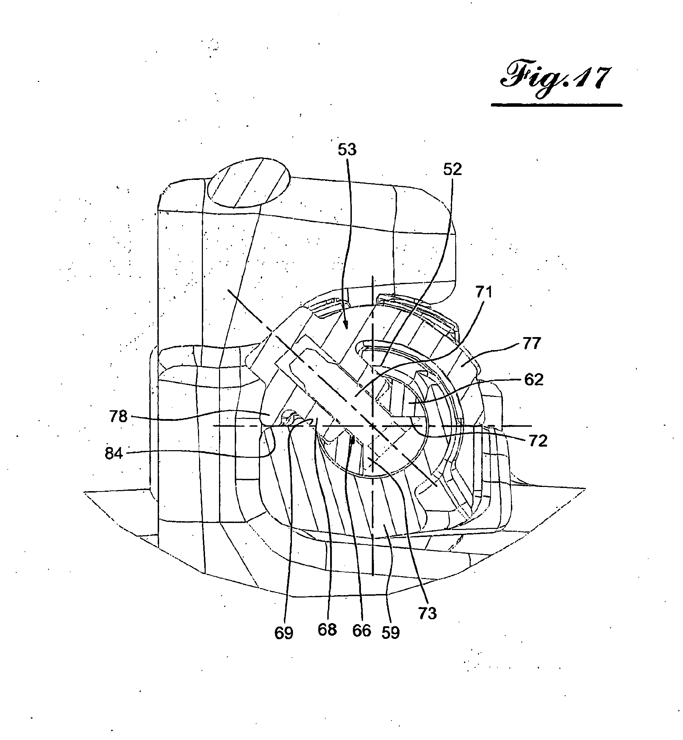

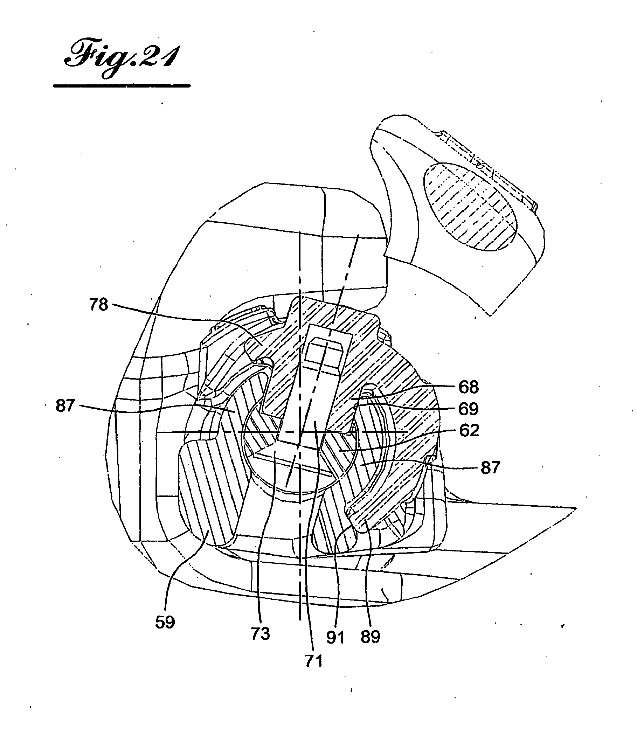

Le dispositif verrou 52 comporte une pièce cylindrique de verrouillage 62 destinée à être axialement insérée dans le corps de menotte 50 et dont l'extrémité intérieure 63 constitue l'élément de verrouillage proprement dit de l'ensemble menotte dans sa position de blocage, dans la mesure où il est en butée, latéralement, contre une face de butée 67 de la partie 56 de palier de l'axe 55 du corps de crochet. L'autre extrémité de la pièce 62 est pourvue d'un trou radial traversant 66 configuré de façon à permettre la solidarisation de la pièce 62 de la poignée 53 par engagement d'un embout cylindrique interne 68 de la poignée 53 dans une partie élargie 69 du trou 66 et au moyen d'une vis d'assemblage 71 comme le montrent notamment les figures 17 et 21. La vis 71 est introduite dans l'orifice 66 du côté diamétralement opposé à la partie plus large 69 de réception de l'embout 68. Le trou 66 est pourvu du côté d'introduction de la vis 71 d'un élargissement tronconique 72 permettant la réception de la tête 73 de la vis.

Pour permettre à la pièce de verrouillage 62 d'effectuer un mouvement de pivotement d'un angle prédéterminé, par exemple de 60°, et un mouvement axial dans le corps de menotte 50, la portion avant 59 présente une découpe 74 de forme appropriée dans sa paroi. Cette découpe sera décrite plus en détail plus loin, après la description de la poignée 53 dont elle dépend.

La poignée 53 est une pièce courbe en forme d'un arc de cercle qui comporte une portion centrale 76 d'une longueur prédéterminée et, de part et d'autre de cette partie médiane, des portions latérales en forme d'ailes 77 et 78. L'embout cylindrique 68 s'étend à partir de la face interne de la pièce, radialement, au voisinage de l'aile 78 comme le montrent notamment les figures 17 et 21. La poignée porte sur sa face externe un élément en saillie 80 qui constitue le moyen de préhension de la poignée.

La figure 17 montre le dispositif verrou 52 dans sa position angulaire et axiale dans laquelle il verrouille le corps de menotte 50 dans sa position de blocage d'un organe d'attelage enfermé dans le berceau 7. Dans cette position l'embout 68 passe à travers une portion de fenêtre 82 de la découpe 74 dans la paroi 87 de la partie tubulaire 59 du corps de menotte. Cette fenêtre 82 est visible sur les figures 12 et. 17 sur laquelle la poignée 53 et donc le dispositif verrou 52 sont montrés dans leurs positions de libération du corps de menotte et dégagent donc la fenêtre 82.

. La figure 21 qui est une vue en coupe, montre la poignée dans sa position angulaire de la figure 12 et permet de comprendre la configuration de la partie tubulaire avant 59 du corps de menotte 50. Les figures 17 et 21 montrent donc le dispositif menotte dans ses deux positions angulaires limites

Sur la figure 17 la poignée est, dans la direction périphérique, en appui par son aile 78 contre un épaulement 84 de la partie tubulaire 59 au niveau du bord inférieur de la fenêtre 82, comme on le voit sur la figure 12. Etant donné que l'embout 68 traverse la paroi de la partie 62 radialement en passant par la fenêtre, la largeur de la fenêtre 82 est donc légèrement supérieure au diamètre de l'embout. Dans cette position angulaire, la poignée est bloquée axialement par le bord 86 de la paroi latérale 87 de la partie 62, qui délimite la fenêtre dans la direction axiale. En effet l'embout 68 serait en butée contre le bord 86. Ceci constitue une mesure de sécurité en cas d'une sollicitation accidentelle de la poignée sous un effort dans l'axe du corps de crochet. La figure 21 est une vue en coupe parallèle au bord 86 à travers la paroi de la partie avant tubulaire 59 du corps de menotte. Sur cette figure 21 qui illustre le dispositif verrou 52 dans sa deuxième position angulaire limite, le bord longitudinal 89 de l'aile 77 de la poignée est appliqué contre une face de butée 91 de la partie avant 59 du corps de menotte. Dans cette position angulaire la poignée est axialement déplaçable sur la pièce 62 grâce à une fente axiale 93 dans la paroi 87 de la partie 59. La figure 12 fait apparaitre en 94 un bord longitudinal de cette fente 93 qui s'ouvre. à une extrémité dans la fenêtre 82 et dont l'extrémité de fond constitue l'arrêt du déplacement axial de la poignée lorsque l'embout 68 vient en butée contre le fond fermé de cette fente.

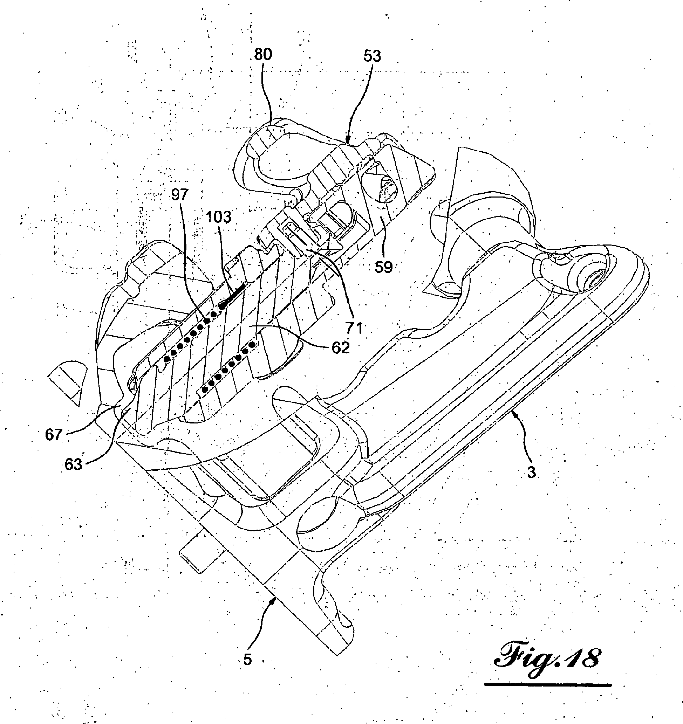

Après avoir décrit les mesures constructives permettant le mouvement angulaire et axial du dispositif verrou, il convient de préciser que ces deux mouvements sont faits à l'encontre d'un ressort de rappel 97. Ce ressort est disposé coaxialement sur la pièce de verrouillage 62 du dispositif verrou, à l'intérieur de la partie tubulaire 59 du corps de menotte et prend appui par une extrémité contre un épaulement 99 formée de la partie d'extrémité interne 63 de cette pièce 62 et, par son autre extrémité, contre un épaulement de butée 101 de la partie tubulaire 59 du corps de menotte. Le mouvement axial de la poignée vers sa position permettant le pivotement latéral de l'ensemble menotte provoque donc la compression du ressort. D'autre part, pour pouvoir effectuer un rappel dans la direction du déplacement angulaire de la poignée, une extrémité, à savoir l'extrémité 103 est bloquée dans le corps de menotte, comme le montre la figure 18 tandis que son autre extrémité 104 est ancrée dans la pièce 62 du dispositif verrou.

Après la description de la structure du deuxième mode de réalisation de l'agencement d'attelage selon l'invention, on décrira ci-après le fonctionnement de celui-ci. Cette description de fonctionnement peut être brève puisqu'il ressort déjà de la description de la structure qui précède.

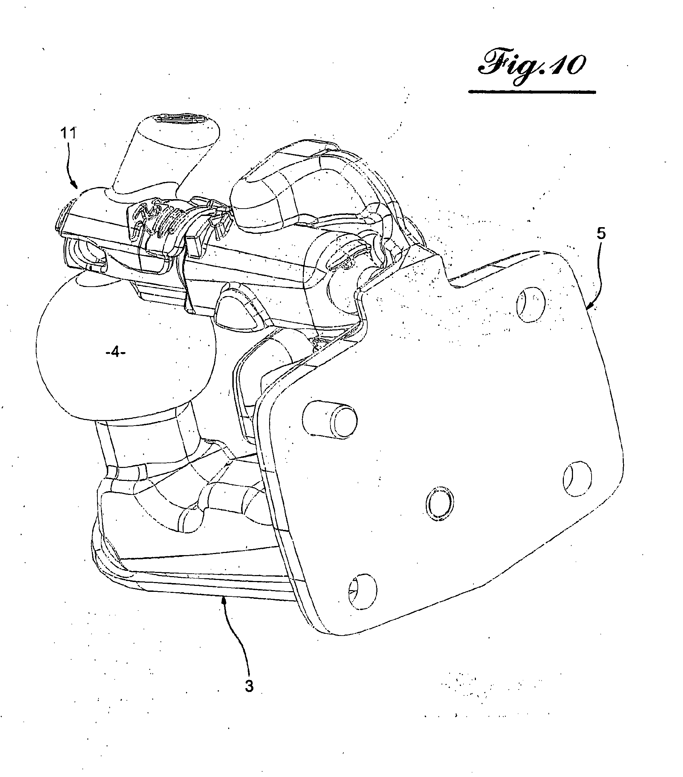

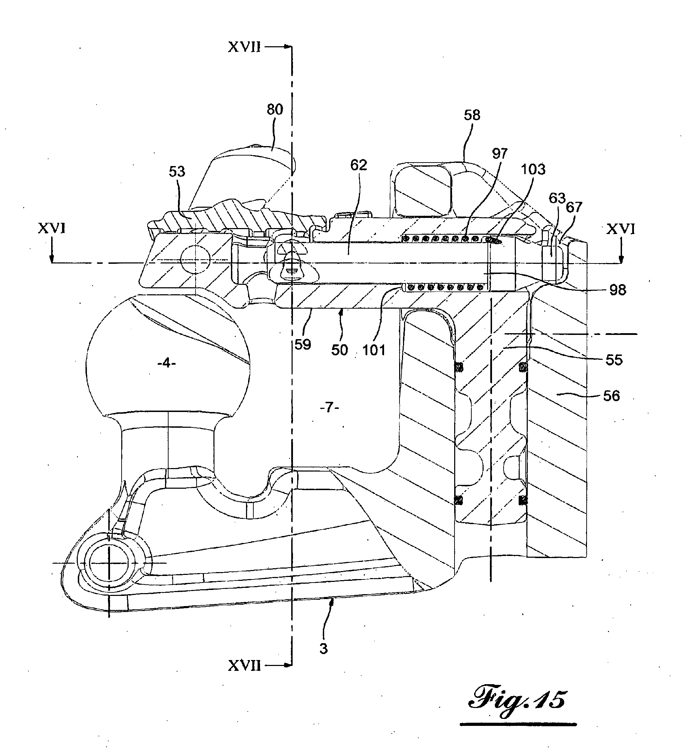

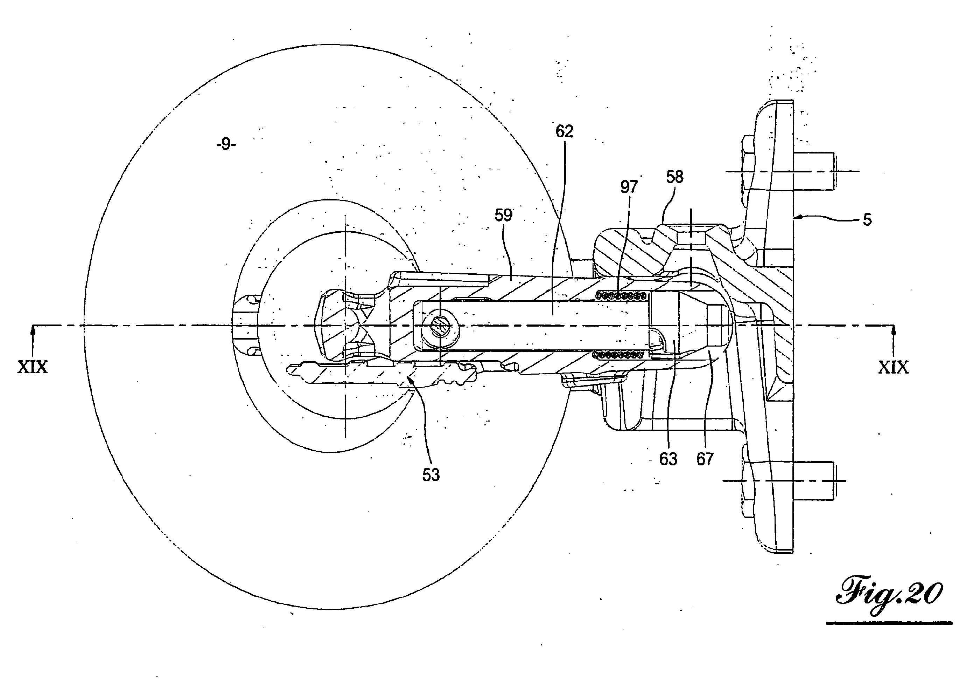

La figure 9 illustre l'agencement dans sa position de fermeture du berceau 7 et donc de l'emprisonnement d'un organe d'attelage dans celui-ci. L'ensemble menotte 50 est bloqué dans cette position par le dispositif verrou 52 qui occupe alors sa position montrée à la figure 17. Le dispositif est maintenu dans cette position par le ressort 97. Le dispositif est axialement immobilisé dans cette position par le bord 86 de la fenêtre 82 du corps de menotte, dans laquelle est engagé l'embout 68 de la poigné.e 53. Dans cette position angulaire et axiale, l'extrémité 63 du dispositif verrou est en butée contre.la face de butée latérale 67 du corps de crochet rendant impossible tout mouvement de pivotement du dispositif menotte comme le montre notamment la figure 15. Pour permettre à l'ensemble menotte 50 de pivoter, il faut pouvoir tirer ce dispositif verrou dans la direction de la flèche 2 (voir par exemple figures 9 et 11) de façon que l'extrémité de verrouillage 63 soit dégagée de la face de butée 67. Les figures 19 et 20 montrent le dispositif verrou dans cette position axiale de dégagement et donc de déverrouillage du dispositif menotte. Mais, avant que ce mouvement axial soit possible, il convient de déplacer le dispositif verrou angulairement dans la position représentée à la figure 21 dans laquelle l'embout 68 peut s'engager dans la fente de déplacement axial 94. Ce pivotement se fait par actionnement de la poignée dans la direction de la flèche 1 et le déplacement axial dans la direction de la flèche 2 (voir par exemple figure 10).

Après ces mouvements de pivotement et axial, le dispositif menotte peut être amené à pivoter de sa position que montre par exemple la figure 12 dans la position d'ouverture représentée à la figure 11, dans laquelle le dispositif menotte 50 s'étend sensiblement perpendiculairement au plan du corps de crochet 3. Après que la poignée a été lâchée, le ressort 97 ramène la poignée dans sa position verrouillée de la figure 17.

On constate ainsi que le ressort a une double fonction, il effectue à la fois un rappel axial de la poignée produit par la déformation en compression du ressort et un rappel angulaire dans la position de la figure 17 en raison de sa déformation en torsion.

Pour l'attelage d'un véhicule mené, après la mise en place par exemple d'un anneau torique dans le berceau, le retour du dispositif menotte 50 de sa position de la figure 11 dans sa position de blocage de la figure 9 se fait en répétant les opérations de la rotation de la poignée 53 puis de la translation axiale de celle-ci et du pivotement du dispositif menotte 50 vers la boule 4. En relâchant ensuite la poignée on obtient qu'elle se verrouille automatiquement.

Il est à noter que le fonctionnement du deuxième mode de réalisation de l'invention ne provoque aucun mouvement d'aucune pièce en hauteur ce qui rend l'agencement parfaitement utilisable dans les cas d'application où un encombrement en hauteur est restrictif.

Il est encore à noter que dans le deuxième mode de réalisation, il y a aussi la possibilité de sécuriser l'attelage formé entre le véhicule tracteur et la remorque par la mise en place d'un cadenas, condamnant toute ouverture du crochet en rendant impossible la rotation de la poignée..

## Revendications

1. Agencement d'attelage pour véhicule tracteur, comportant un corps de crochet sur lequel peut être attelé un organe d'attelage d'un véhicule mené et un ensemble menotte déplaçable entre une position de blocage de l'organe d'attelage dans sa position attelée sur le corps de crochet et une position permettant le désengagement de cet organe d'attelage du corps de crochet, l'ensemble menotte (11) comprenant un corps de menotte (18) et. un dispositif verrou (20) permettant le verrouillage de l'ensemble menotte dans sa position de blocage le dispositif verrou (20) comprenant des moyens (63,30) de verrouillage de l'ensemble menotte (11) sur le corps de crochet (3) lorsque l'ensemble est dans sa position de blocage précité et l'ensemble (11) comprenant des moyens (33,52) de verrouillage du dispositif verrou (20) sur le corps de menotte (18,50) lorsque l'ensemble menotte (11) occupe sa position de blocage, qui sont intégrés à l'ensemble menotte, le dispositif verrou étant formé par un verrou (20) qui est réalisé sous forme d'un capot monté pivotant sur le corps de menotte (18), **caractérisé en ce que** l'ensemble menotte (11) est monté sur le corps de crochet (3), pivotant autour d'un axe vertical (14) implanté dans la surface supérieure libre (15) de la base (16) du corps de crochet.

2. Agencement selon l'une des revendications 1, **caractérisé en ce que** l'ergot de verrouillage (30) du verrou (20) en forme de capot est susceptible de s'engager dans un orifice (31) prévu dans la surface supérieure libre (15) de l'organe de crochet.

3. Agencement selon la revendications 2, **caractérisé en ce que** le verrou (20) est monté sur le corps de menotte (18) pivotant autour d'un axe perpendiculaire à l'axe (14) de pivotement de l'ensemble menotte (11) sur le corps de verrou, à l'encontre d'un ressort de rappel (24) du verrou dans sa position de verrouillage de l'ensemble menotte dans sa position de blocage d'un organe d'attelage (9).

4. Agencement selon l'une des revendications 1 à 3, **caractérisé en ce que** les moyens de verrouillage du verrou (20) précités comprennent un pion (33) déplaçable dans le corps de menotte (18) entre une position de verrouillage du verrou dans sa position de verrouillage par l'ergot (30) de l'ensemble menotte dans sa position de blocage d'un organe d'attelage et une position de désengagement de l'ergot dans laquelle l'ensemble menotte peut pivoter librement autour de son axe de pivotement (14).

5. Agencement selon la revendication 4, **caractérisé en ce que** le pion (33) est déplaçable pour quitter sa position de verrouillage par enfoncement manuel dans le corps de menotte à l'encontre d'un ressort de rappel (35).

6. Agencement selon la revendication 5, **caractérisé en ce que** le pion (33) traverse un évidement (44) pratiqué dans la paroi latérale correspondante du verrou (20) en forme de capot, qui est configuré de façon à permettre en coopération avec la configuration du pion le verrouillage et le pivotement du verrou sur le corps de menotte.

7. Agencement selon la revendication 1, **caractérisé en ce que** le corps de menotte (50) est tubulaire et le dispositif verrou (52) est monté pivotant et axialement mobile dans le corps de menotte.

8. Agencement selon la revendication 7, **caractérisé en ce que** le dispositif verrou (52) comprend une pièce de verrouillage (62) qui est axialement mobile dans le corps de menotte (50) entre une position de verrouillage de l'ensemble menotte (11) dans sa position de blocage et une position de déverrouillage de l'ensemble menotte et pivotant entre une position dans laquelle elle est axialement immobilisée et une position dans laquelle est axialement déplaçable entre ses positions de verrouillage et de déverrouillage, la pièce étant axialement immobilisable par pivotement dans sa position de verrouillage.

9. Agencement selon la revendication 8, **caractérisé en ce que** le dispositif verrou (52) comporte des moyens de rappel (97) de la pièce de verrouillage (62) dans sa position axialement immobilisée dans sa position de verrouillage de l'ensemble menotte (11).

10. Agencement selon la revendication 9, **caractérisé en ce que** les moyens de rappel (97) sont formés par un ressort élastiquement déformable en compression et en torsion, qui est monté entre la pièce de verrouillage (62) et le corps de menotte (50).

11. Agencement selon l'une des revendications 7 à 10, **caractérisé en ce que** le dispositif verrou (52) comporte une poignée (53) qui permet le pivotement et le déplacement axial de la pièce de verrouillage (62).

## Patentansprüche

1. Anhängerkupplungsanordnung für Zugfahrzeug, mit einem Hakenkörper, am dem ein Anhängerkupplungsorgan eines gezogenen Fahrzeugs ankuppelhar ist, und mit einer zwischen einer Blockierposition des Anhängerkupplungsorgan in seiner auf dem Hakenkörper angekuppelten Position und einer Position, die das Lösen dieses Anhängerkupplungsorgans vom Hakenkörper erlaubt, bewegbaren Sperreinheit, wobei die Sperreinheit (11) einen Sperrkörper (18) und eine Riegelvorrichtung (20), die das Verriegeln der Sperreinheit in ihrer Blockierposition erlaubt, besitzt, wobei die Riegelvorrichtung (20) Verriegelungsmittel (63, 30) der Sperreinheit (11) auf dem Hakenkörper (3) umfasst, wenn die Einheit in ihrer vorgenannten Blockierposition ist, und wobei die Einheit (11) Verriegelungsmittel (33, 52) der Riegelvorrichtung (20) auf dem Sperrkörper (18, 50) umfasst, wenn die Sperreinheit (11) ihre Blockierposition einnimmt, die in die Sperreinheit integriert sind, wobei die Riegelvorrichtung von einem Riegel (20) gebildet ist, der in Form einer auf dem Sperrkörper (18) schwenkbar montierten Haube ausgebildet ist, **dadurch gekennzeichnet, dass** die Sperreinheit (11) auf dem Hakenkörper (3) um eine vertikale Achse (14), die in die freie obere Fläche (15) der Basis (16) des Hakenkörpers eingelassen ist, schwenkbar montiert ist.

2. Anordnung nach einem der Ansprüche 1, **dadurch gekennzeichnet, dass** der Verriegelungsdorn (30) des Riegels (20) in Haubenform imstande ist, in eine in der freien oberen Fläche (15) des Hakenorgans vorgesehene Öffnung (31) einzugreifen.

3. Anordnung nach Anspruch 2, **dadurch gekennzeichnet, dass** der Riegel (20) auf dem Sperrkörper (18) um eine zur Schwenkachse (14) der Sperreinheit (11) auf dem Riegelkörper lotrechte Achse gegen eine Rückstellfeder (24) des Riegels in seine Verriegelungsposition der Sperreinheit in ihrer Blockierposition eines Anhängerkupplungsorgans (9) schwenkbar montiert ist.

4. Anordnung nach einem der Ansprüche 1 bis 3, **dadurch gekennzeichnet, dass** die vorgenannten Verriegelungsmittel des Riegels (20) einen im Sperrkörper (18) zwischen einer Verriegelungsposition des Riegels in seiner Verriegelungsposition durch den Dorn (30) der Sperreinheit in ihrer Blockierposition eines Anhängerkupplungsorgans und einer Löseposition des Dorns, in der die Sperreinheit frei um ihre Schwenkachse (14) schwenkbar ist, bewegbaren Stift (33) umfassen.

5. Anordnung nach Anspruch 4, **dadurch gekennzeichnet, dass** der Stift (33) verlagerbar ist, um seine Verriegelungsposition durch manuelles Versenken in den Sperrkörper gegen eine Rückstellfeder (35) zu verlassen.

6. Anordnung nach Anspruch 5, **dadurch gekennzeichnet, dass** der Stift (33) eine in die entsprechende Seitenwand des Riegels (20) in Haubenform eingearbeitete Aussparung (44) durchquert, die derart konfiguriert ist, dass die Verrieglung und das Schwenken des Riegels auf dem Sperrkörper in Zusammenarbeit mit der Konfiguration des Stifts erlaubt ist.

7. Anordnung nach Anspruch 1, **dadurch gekennzeichnet, dass** der Sperrkörper (50) rohrförmig ist und die Riegelvorrichtung (52) schwenkbar und axial bewegbar im Sperrkörper montiert ist.

8. Anordnung nach Anspruch 7, **dadurch gekennzeichnet, dass** die Riegelvorrichtung (52) ein Verriegelungsteil (62) umfasst, das im Sperrkörper (50) zwischen einer Verriegelungsposition der Sperreinheit (11) in ihrer Blockierposition und einer Entriegelungsposition der Sperreinheit axial bewegbar und zwischen einer Position, in der es axial blockiert ist, und einer Position, in der es zwischen seiner Verriegelungs- und Entriegelungsposition axial beweglich ist, schwenkbar ist, wobei das Teil durch Schwenken in seiner Verriegelungsposition axial blockierbar ist.

9. Anordnung nach Anspruch 8, **dadurch gekennzeichnet, dass** die Riegelvorrichtung (52) Rückstellmittel (97) des Verriegelungsteils (62) in seine axial blockierte Position in seiner Verriegelungsposition der Sperreinheit (11) aufweist.

10. Anordnung nach Anspruch 9, **dadurch gekennzeichnet, dass** die Rückstellmittel (97) von einer in Kompression und in Torsion elastisch verformbaren Feder gebildet sind, die zwischen dem Verriegelungsteil (62) und dem Sperrkörper (50) angeordnet ist.

11. Anordnung nach einem der Ansprüche 7 bis 10, **dadurch gekennzeichnet, dass** die Riegelvorrichtung (52) einen Griff (53) aufweist, der das Schwenken und die axiale Verlagerung des Verriegelungsteils (62) erlaubt.

## Claims

1. A hitch arrangement for a tow vehicle, comprising a hook body for receiving a coupling member of a towed vehicle and a lock assembly movable between a locking position for locking the coupling member in its position hitched on the hook body and a position allowing that coupling member to be disengaged from the hook body, the lock assembly (11) comprising a lock body (18) and a lock device (20) allowing the lock assembly to be locked in its position locking the lock device (20) comprising means (63, 30) for locking the lock assembly on the hook body (3) when the assembly is in its aforementioned lock position and the assembly (11) comprising means (33, 52) for locking the lock device (20) on the lock body (18, 50) when the lock assembly (11) is in its locking position, which are incorporated into the lock assembly, the lock device being formed by a lock (20) that is made in the form of a cover mounted pivoting on the lock body (18), **characterized in that** the lock assembly (11) is mounted on the hook body (3), pivoting around a vertical axis (14) implanted in the free upper surface (15) of the base (16) of the hook body.

2. The arrangement according to [claim] 1, **characterized in that** the locking lug (30) of the cover-forming lock (20) is able to engage in an orifice (31) provided in the free upper surface (15) of the hook member.

3. The arrangement according to claim 2, **characterized in that** the lock (20) is mounted on the lock body (18) pivoting around an axis perpendicular to the pivot axis (14) of the lock assembly (11) on the lock body, against a return spring (24) returning the lock to its position locking the lock assembly in its position locking a coupling member (9).

4. The arrangement according to one of claims 1 to 3, **characterized in that** the locking means of the aforementioned lock (20) comprise a pin (33) movable in the lock body (18) between a position where the lock is locked in its locking position by the lug (30) of the lock assembly in its position locking a coupling member, and a disengaged position of the lug in which the lock assembly can pivot freely around its pivot axis (14).

5. The arrangement according to claim 4, **characterized in that** the pin (33) can be moved to leave its locked position by manually pushing the end connection body in against a return spring (35).

6. The arrangement according to claim 5, **characterized in that** the pin (33) passes through a recess (44) formed in the corresponding side wall of the cover-forming lock (20), which is configured so as to allow, in cooperation with the configuration of the pin, the locking and pivoting of the lock on the lock body.

7. The arrangement according to claim 1, **characterized in that** the lock body (50) is tubular and the locking device (52) is mounted pivotably and axially movably in the lock body.

8. The arrangement according to claim 7, **characterized in that** the locking device (52) comprises a locking part (62) that is axially movable in the lock body (50) between a position locking the lock assembly (11) in its locking position and a position unlocking the lock assembly and pivoting between a position in which it is axially immobilized and a position in which [it] is axially movable between its locked and unlocked positions, the part being able to be axially immobilized by pivoting in its locked position.

9. The arrangement according to claim 8, **characterized in that** the locking device (52) comprises return means (97) for returning the locking part (62) to its position axially immobilized in its position locking the lock assembly (11).

10. The arrangement according to claim 9, **characterized in that** the return means (97) are formed by a spring elastically deformable in compression and torsion, which is mounted between the locking part (62) and the lock body (50).

11. The arrangement according to one of claims 7 to 10, **characterized in that** the locking device (52) comprises a handle (53) that allows the pivoting and axial movement of the locking part (62).
